# EUROPEAN PATENT APPLICATION

(11) **EP 4 588 655 A1**
(43) Date of publication of application: **23.07.2025**
(21) Application number: 25153413.7
(22) Date of filing: 22.01.2025
(51) Int. Cl.: B32B 15/08, B32B 27/28, B64D 45/02

(54) **SULFONATED THERMOPLASTIC PART AND METHOD FOR FORMING SAME**

(30) Priority: 22.01.2024 US 202463623630 P
(71) Applicant: Rohr, Inc., Chula Vista, CA 91910-2098 (US)
(72) Inventor: SHEN, Shyan Bob, San Diego, 92126 (US); VAN TOOREN, Michael, San Diego, 92122 (US); URSENBACH, Daniel O., El Cajon, 92019 (US); CROSHAW, Chris, San Diego, 92110 (US); SONN, Mark H., Escondido, 92026 (US); ORTEGA, Hannibelle, San Dimas, 91773 (US); BORDAGE, Kevin R., Westfield, 01085 (US); SMITH, Blair A., South Windsor, 06074 (US); PUJAR, Vijay V., San Diego, 92127 (US)
(74) Representative: Dehns

(57) **Abstract**

A thermoplastic part (32) for an aircraft includes a thermoplastic skin (34), a conductive metal layer (36), a thermoplastic resin film (38), and a paint coating (40). The thermoplastic skin (34) includes an inner skin side (42) and an outer skin side (44). The conductive metal layer (36) includes an inner layer side (46) and an outer layer side (48). The inner layer side (46) is disposed at the outer skin side (44) of the thermoplastic skin (34). The thermoplastic resin film (38) includes an inner film side (50) and an outer film side (52). The inner film side (50) is disposed at the outer layer side (48) of the conductive metal layer (36). The thermoplastic resin film (38) includes a sulfonated thermoplastic resin material forming a sulfonated region of the thermoplastic resin film (38) at the outer film side (52). The paint coating (40) is disposed on the outer film side (52) of the thermoplastic resin film (38) coincident with the sulfonated region.

## Description

### BACKGROUND

### 1. Technical Field

This disclosure relates generally to thermoplastic parts for aircraft and, more particularly, to methods for applying a sulfonation treatment to a thermoplastic part.

### 2. Background Information

Aircraft components, such as those forming aerostructure components (e.g., panels) of a fuselage, wings, propulsion system nacelles, interior parts, and other structural components of aircraft, increasingly include thermoplastic materials (e.g., thermoplastic composite materials). While these thermoplastic materials provide substantial benefits to aircraft weight and manufacturing costs, they can be resistant to coating by paint and other coating materials. Various processes are known in the art for improving the coating characteristics of thermoplastic parts. While these known processes have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present disclosure, a thermoplastic part for an aircraft includes a thermoplastic skin, a conductive metal layer, a thermoplastic resin film, and a paint coating. The thermoplastic skin includes an inner skin side and an outer skin side. The conductive metal layer includes an inner layer side and an outer layer side. The inner layer side is disposed at the outer skin side of the thermoplastic skin. The thermoplastic resin film including an inner film side and an outer film side. The inner film side is disposed at the outer layer side of the conductive metal layer. The thermoplastic resin film includes a sulfonated thermoplastic resin material forming a sulfonated region of the thermoplastic resin film at the outer film side. The paint coating is disposed on the outer film side of the thermoplastic resin film coincident with the sulfonated region.

In any of the aspects or embodiments described above and herein, the sulfonated region may have a sulfur content with an infrared spectrum detectable amount of a sulfone group (O=S=O) with a peak wavenumber between 1,000 cm⁻¹ and 1,098 cm⁻¹.

In any of the aspects or embodiments described above and herein, the conductive metal layer may include an expanded copper foil, an expanded aluminum foil, a bronze mesh, or an aluminum mesh.

In any of the aspects or embodiments described above and herein, the thermoplastic skin may include a thermoplastic matrix material, and the thermoplastic matrix material is the same as the thermoplastic resin material.

In any of the aspects or embodiments described above and herein, the thermoplastic matrix material may be a polyether ether ketone (PEEK), a poly ether ketone ketone (PEKK), or a poly aryl ether ketone (PAEK) thermoplastic matrix material.

According to another aspect of the present disclosure, a method for forming a thermoplastic part for an aircraft includes consolidating at least a thermoplastic skin and a conductive metal layer to form: the thermoplastic skin including an inner skin side and an outer skin side, the conductive metal layer including an inner layer side and an outer layer side, and the inner layer side is disposed at the outer skin side of the thermoplastic skin, and a thermoplastic resin film including an inner film side and an outer film side, and the inner film side is disposed at the outer layer side of the conductive metal layer. The method further includes sulfonating a thermoplastic resin material of the thermoplastic resin film by applying a sulfonation fluid to the thermoplastic resin film to form a sulfonated region of the thermoplastic resin film at the outer film side and applying a paint coating to the outer film side of the thermoplastic resin film coincident with the sulfonated region.

In any of the aspects or embodiments described above and herein, the method may further include assembling the thermoplastic skin, the conductive metal layer, and the thermoplastic resin film together prior to consolidating at least the thermoplastic skin and the conductive metal layer. Consolidating at least the thermoplastic skin and the conductive metal layer may include consolidating the thermoplastic skin, the conductive metal layer, and the thermoplastic resin film together.

In any of the aspects or embodiments described above and herein, the step of sulfonating the thermoplastic resin material may be performed prior to the step of consolidating the thermoplastic skin, the conductive metal layer, and the thermoplastic resin film together.

In any of the aspects or embodiments described above and herein, the step of sulfonating the thermoplastic resin material may be performed subsequent to the step of consolidating the thermoplastic skin, the conductive metal layer, and the thermoplastic resin film together.

In any of the aspects or embodiments described above and herein, consolidating at least the thermoplastic skin and the conductive metal layer may include consolidating the thermoplastic skin and the conductive metal layer together to form the thermoplastic resin film by directing a thermoplastic matrix material of the thermoplastic skin through a porous metal material of the conductive metal layer.

In any of the aspects or embodiments described above and herein, the sulfonating fluid may be a sulfonating gas.

In any of the aspects or embodiments described above and herein, the sulfonating fluid is a sulfonating liquid.

In any of the aspects or embodiments described above and herein, the sulfonating liquid may have a sulfur trioxide (SO₃) content of between 5 percent and 30 percent, by mass.

In any of the aspects or embodiments described above and herein, the sulfonated region may have a sulfur content with an infrared spectrum detectable amount of a sulfone group (O=S=O) with a peak wavenumber between 1,000 cm⁻¹ and 1,098 cm⁻¹.

In any of the aspects or embodiments described above and herein, the thermoplastic skin may include a thermoplastic matrix material. The thermoplastic matrix material may be different than the thermoplastic resin material.

According to another aspect of the present disclosure, which the Applicant expressly reserves the right to claim independently, a thermoplastic part for an aircraft includes a thermoplastic skin, a conductive metal layer, and a thermoplastic resin film. The thermoplastic skin includes an inner skin side and an outer skin side. The conductive metal layer includes an inner layer side and an outer layer side. The inner layer side is disposed at the outer skin side of the thermoplastic skin. The thermoplastic resin film includes an inner film side and an outer film side. The inner film side is disposed at the outer layer side of the conductive metal layer. The thermoplastic resin film includes a sulfonated thermoplastic resin material forming a sulfonated region of the thermoplastic resin film at the outer film side. The sulfonated region has a sulfur content with an infrared spectrum detectable amount of a sulfone group (O=S=O) with a peak wavenumber between 1,000 cm⁻¹ and 1,098 cm⁻¹.

In any of the aspects or embodiments described above and herein, the sulfonated region may have the sulfur content with the infrared spectrum detectable amount of the sulfone group (O=S=O) with the peak wavenumber between 1,025 cm⁻¹ and 1,050 cm⁻¹.

In any of the aspects or embodiments described above and herein, the thermoplastic skin may include a thermoplastic matrix material. The thermoplastic matrix material may be the same as the thermoplastic resin material.

In any of the aspects or embodiments described above and herein, the thermoplastic matrix material may be a polyether ether ketone (PEEK), a poly ether ketone ketone (PEKK), or a poly aryl ether ketone (PAEK) thermoplastic matrix material.

In any of the aspects or embodiments described above and herein, the conductive metal layer may be a metal mesh or a metal foil.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a perspective view of an aircraft, in accordance with one or more embodiments of the present disclosure.
FIG. 2 schematically illustrates a cutaway view of a portion of a thermoplastic part for an aircraft, in accordance with one or more embodiments of the present disclosure.
FIG. 3 illustrates a flow chart depicting a method for forming a thermoplastic part, in accordance with one or more embodiments of the present disclosure.
FIGS. 4A-C schematically illustrate sequential, cutaway views of a portion of a thermoplastic part at various formation stages, in accordance with one or more embodiments of the present disclosure.

### DETAILED DESCRIPTION

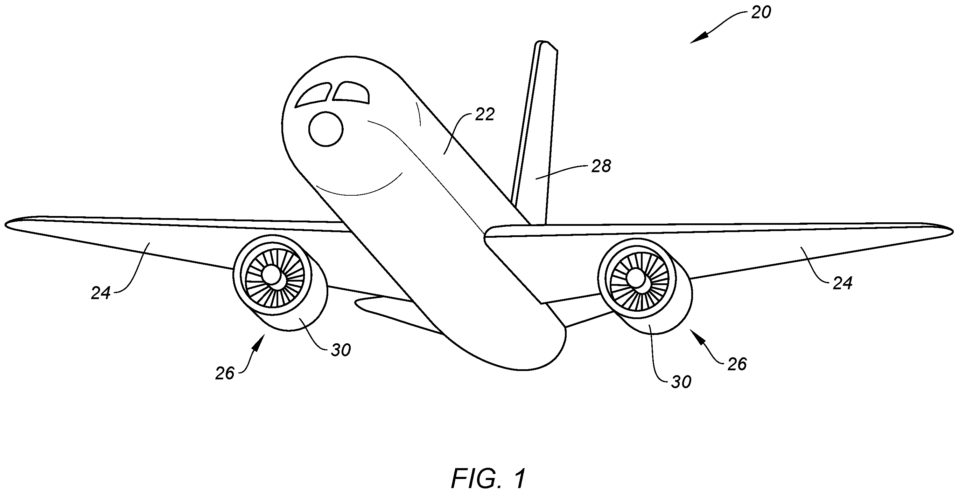

FIG. 1 illustrates an aircraft 20 such as an airplane (e.g., a fixed-wing aircraft). The aircraft 20 of FIG. 1 includes a fuselage 22, wings 24, propulsion systems 26, and a tail assembly 28. The wings 24 extend outward from the fuselage 22. Each of the propulsion systems 26 is mounted on a respective one of the wings 24. The tail assembly 28 is disposed at an aft end of the fuselage 22. The present disclosure, however, is not limited to the foregoing exemplary aircraft 20 configuration, and the aircraft 20 may alternatively be a rotary-wing aircraft (e.g., a helicopter), a tilt-rotor aircraft, a tilt-wing aircraft, a propeller-driven aircraft, or another aerial vehicle. Moreover, the aircraft 20 may be a manned aerial vehicle or an unmanned aerial vehicle (UAV, e.g., a drone, a satellite, etc.)

The propulsion systems 26 of FIG. 1 are configured as a turbofan gas turbine engine propulsion system. However, it should be understood that aspects of the present disclosure may be equally applicable to other configurations of propulsion system or gas turbine engine configurations. Each of the propulsion systems 26 of FIG. 1 includes a nacelle 30 configured to house and provide an exterior aerodynamic cover for the respective one of the propulsion systems 26.

Aircraft parts, such as those forming all or portions of the fuselage 22, the wings 24, the tail assembly 28, the nacelle 30, or other aerostructures of the aircraft 20 may be selected to provide suitable structural strength, rigidity, and impact resistance while also minimizing weight. Other examples of aircraft parts may include ducts, water collectors, brake rods, electronic boxes, heat sinks, piping, interior structures (e.g., lavatory surfaces, galley surfaces, tray tables, seat frames, etc.), electrical connector components, and the like. Thermoplastic materials (e.g., thermoplastic composite materials) may be used for aircraft parts, such as those described above, in order to reduce aircraft weight and manufacturing costs, for example, in comparison to conventional metal (e.g., aluminum) and thermoset materials. However, thermoplastic parts tend to exhibit low surface energy, thereby contribution to poor adhesion of paint, metal plating, lightning strike protection layers, bonding agents (e.g., adhesives), and other coatings (hereinafter collectively "TP coatings") to surfaces of the thermoplastic parts. These poor adhesion characteristics of thermoplastic parts can, in some cases, degrade the effectiveness of lightning strike protection layers, accelerate cracking and/or peeling of paint or other surface coatings, and/or prevent suitable bonding between thermoplastic parts.

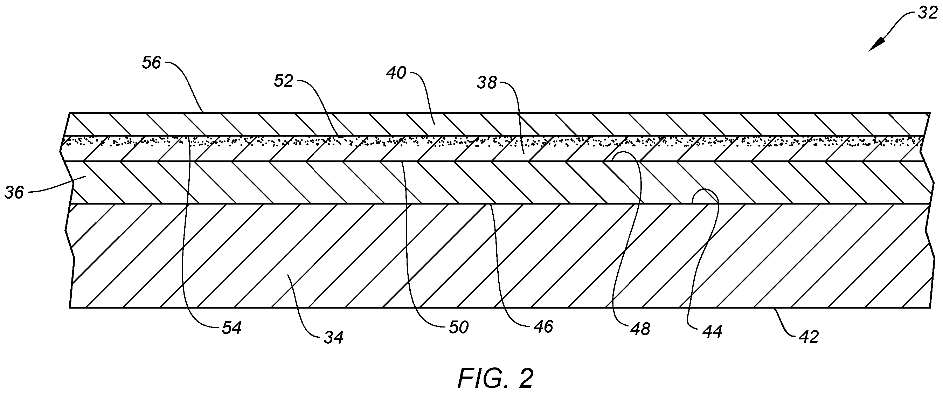

FIG. 2 illustrates a cutaway view of a portion of a thermoplastic part 32. The thermoplastic part 32 of FIG. 2 is configured as a panel which may be configured form an exterior surface or skin for a portion of the fuselage 22, the wings 24, the tail assembly 28, the nacelle 30, or another thermoplastic part of the aircraft 20 (see FIG. 1). The thermoplastic part 32 of FIG. 2 includes a thermoplastic skin 34, a conductive layer 36, a resin film 38, and a coating 40.

The thermoplastic skin 34 extends between and to an inner side 42 of the thermoplastic skin 34 and an outer side 44 of the thermoplastic skin 34. The thermoplastic skin 34 is formed wholly or in substantial part by a thermoplastic material (e.g., a fiber-reinforced, thermoplastic composite material). The thermoplastic material includes a thermoplastic matrix material (e.g., a thermoplastic resin) and a composite reinforcement material. Examples of the thermoplastic matrix material include polyamide (PA), polyamide-imide (PAI), polyarylsulfone (PAS), polyether sulfone (PES), polyoxymethylene (POM), polyphenylene sulfide (PPS), polyether ether ketone (PEEK), polyetherimide (PEI), polyphthalamide (PPA), poly ether ketone ketone (PEKK), or poly aryl ether ketone (PAEK), or the like, or any combination thereof.. Examples of the composite reinforcement material include glass fibers, carbon fibers, aramid fibers, basalt fibers, mineral fibers, fibers from renewable raw materials, metal fibers, or polymer fibers, or the like, or any combination thereof. The present disclosure is not limited to the foregoing exemplary thermoplastic material materials and composite reinforcement materials. Thermoplastic parts very often include a plurality of composite reinforcement layers. The reinforcement fibers in each layer may have a fiber direction (e.g., all fibers in a layer may be oriented in the same direction). In some instances, a thermoplastic part including a plurality of composite reinforcement layers will have different fiber layers with different fiber directions. For example, a first layer may have fibers oriented in a first direction and a second layer may have fibers oriented in a second direction that is perpendicular to the first direction, or at opposing forty-five degree angles, or at opposing thirty degree angles, and the like.

The conductive layer 36 extends between and to an inner side 46 of the conductive layer 36 and an outer side 48 of the conductive layer 36. The conductive layer 36 (e.g., the inner side 46) is disposed on the thermoplastic skin 34 (e.g., the outer side 44). The conductive layer 36 is formed wholly or in substantial part by an electrically-conductive material. For example, the electrically-conductive material may be a metal or metal alloy such as, but not limited to, bronze, copper, aluminum, or another suitable electrically conductive material. The conductive layer 36 may be configured as a metal mesh or a metal foil, for example, an expanded copper foil, an expanded aluminum foil, a bronze mesh, or an aluminum mesh. The conductive layer 36 may typically be porous or otherwise permeable between the inner side 46 and the outer side 48. For example, the conductive layer 36 may be formed by a perforated metal foil. For metal foil configurations of the conductive layer 36, the conductive layer 36 may be approximately 40 to 200 grams per square meter (GSM). For metal mesh configurations of the conductive layer 36, the conductive layer may be approximately 40 to 1,000 GSM. The present disclosure, however, is not limited to the foregoing exemplary GSM ranges of the conductive layer 36.

The resin film 38 extends between and to an inner side 50 of the resin film 38 and an outer side 52 of the resin film 38. The resin film 38 (e.g., the inner side 50) is disposed on the conductive layer 36 (e.g., the outer side 48). The resin film 38 includes a thermoplastic resin material. Examples of the thermoplastic resin material include polyamide (PA), polyamide-imide (PAI), polyarylsulfone (PAS), polyethersulfone (PES), polyoxymethylene (POM), polyphenylene sulfide (PPS), polyether ether ketone (PEEK), polyetherimide (PEI), polyphthalamide (PPA), poly ether ketone ketone (PEKK), or poly aryl ether ketone (PAEK), or the like, or any combination thereof. The thermoplastic resin material of the resin film 38 may be the same as the thermoplastic matrix material of the thermoplastic skin 34. The thermoplastic resin material of the resin film 38 may alternatively be different than the thermoplastic matrix material of the thermoplastic skin 34. The resin film 38 may typically have a thickness between the inner side 50 and the outer side 52 of 0.02 to 0.12 millimeters (mm). The present disclosure, however, is not limited to any particular thickness of the resin film 38.

The resin film 38 is a sulfonated resin film. The sulfonated thermoplastic part 32 may have a sulfur content with an infrared spectrum detectable amount of the sulfone group (O=S=O) with a peak wavenumber in the region between approximately 1,000 cm⁻¹ and approximately 1,098 cm⁻¹ and, more preferably, between approximately 1,025 cm⁻¹ and approximately 1,050 cm⁻¹ with a peak intensity higher than approximately 0.002 absorbance (or higher than approximately 0.2 percent reflectance) using, for example, an attenuated total reflectance (ATR) technique at (e.g., on, adjacent, or proximate) the outer side 52.

The coating 40 extends between and to an inner side 54 of the coating 40 and an outer side 56 of the coating 40. The coating 40 (e.g., the inner side 54) is disposed on the resin film 38 (e.g., the outer side 52). The coating 40 (e.g., the outer side 56) forms an exterior surface of the thermoplastic part 32. The coating 40 of FIG. 2 is a paint coating including one or more paint layers (e.g., primer and/or topcoat layers).

During flight, aircraft (e.g., the aircraft 20) may be vulnerable to lightning strike. Unlike metal aerostructures, aerostructures formed primarily from thermoplastic panels and other parts (e.g., the thermoplastic part 32) do not readily conduct away the extreme electrical currents and electromagnetic forces generated by lightning striking the aircraft. The conductive layer 36 facilitates the conduction of electrical currents through the thermoplastic part 32, thereby providing improved lightning strike protection for the aircraft 20. As previously discussed, thermoplastic materials also tend to exhibit low surface energy, thereby contribution to poor adhesion of paint. These poor adhesion characteristics of thermoplastic materials can, in some cases, degrade the effectiveness of conductive lightning strike protection layers, accelerate cracking and/or peeling of paint or other surface coatings, and/or prevent suitable bonding between thermoplastic parts. The sulfur content of the sulfonated resin film 38 facilitates improved surface energy and a reduced contact angle (e.g., less than 30 degrees) for the resin film 38, for example, in comparison to unsulfonated thermoplastic resins, thereby improving the adhesion of paint or other coatings for the thermoplastic part 32 and providing protection for the conductive layer 36 to facilitate effective lightning strike protection.

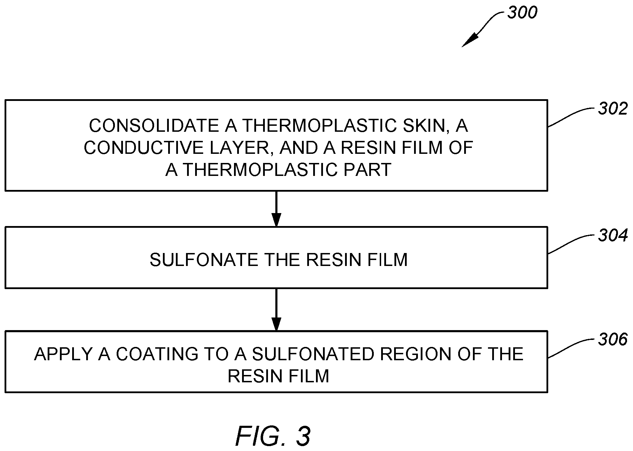

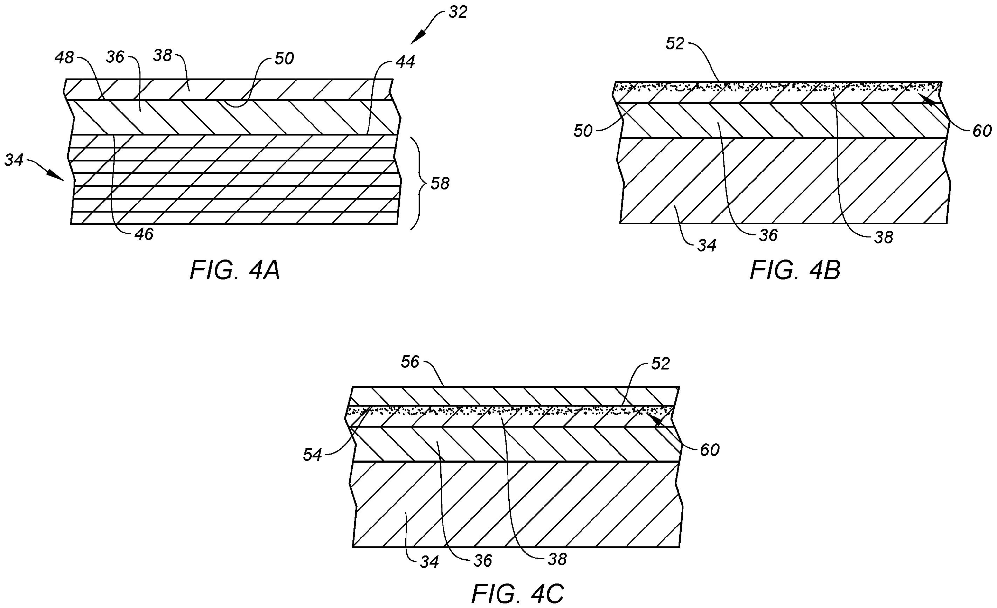

Referring to FIGS. 3 and 4A-C, a Method 300 for forming a thermoplastic part (e.g., the thermoplastic part 32) is provided. FIG. 3 illustrates a flowchart for the Method 300. FIGS. 4A-C illustrate sequential, cutaway views of the thermoplastic part 32 at various stages of the Method 300. Unless otherwise noted herein, it should be understood that the steps of Method 300 are not required to be performed in the specific sequence in which they are discussed below and, in some embodiments, the steps of Method 300 may be performed separately or simultaneously. Further, it should be understood that not all of the steps of the Method 300, discussed below, may be required unless otherwise described herein.

Step 302 includes consolidating the thermoplastic skin 34, the conductive layer 36, and the resin film 38 together. FIG. 4A illustrates the thermoplastic skin 34, the conductive layer 36, and the resin film 38 arranged together in preparation for consolidation. The conductive layer 36 of FIG. 4A is positioned with the inner side 46 at (e.g., on, adjacent, or proximate) the outer side 44 of the thermoplastic skin 34. The resin film 38 of FIG. 4A is positioned with the inner side 50 at (e.g., on, adjacent, or proximate) the outer side 48 of the conductive layer 36. The thermoplastic skin 34 may be formed by a plurality of pre-preg sheets 58 each including the composite reinforcement material (e.g., reinforcing fibers) embedded in the thermoplastic matrix material. In Step 302, the resin film 38 is a resin film without sulfonation. The thermoplastic skin 34 (e.g., the plurality of pre-preg sheets 58), the conductive layer 36, and the resin film 38 may be consolidated together by heating the assembly of the thermoplastic skin 34, the conductive layer 36, and the resin film 38 to a temperature above the thermoplastic matrix material and the thermoplastic resin material melting points while applying pressure to shape the thermoplastic part 32, for example, using any suitably thermoplastic consolidation process conventionally known in the art. FIG. 4B illustrates the consolidated thermoplastic skin 34, conductive layer 36, and resin film 38.

Step 304 includes sulfonating the resin film 38. For example, Step 304 may include applying a sulfonation fluid to the resin film 38 (e.g., the outer side 52). The thermoplastic part 32, formed by consolidating the thermoplastic skin 34, conductive layer 36, and resin film 38 may be positioned within a chamber (e.g., a fully or partially enclosed tank) with the resin film 38 (e.g., the outer side 52) exposed to the sulfonating fluid. The sulfonation fluid may be a gas or liquid as will be discussed below. The present disclosure is not limited to any particular gas or liquid sulfonating process, and the thermoplastic part 32 may be sulfonated using any conventional gas or liquid sulfonating process conventionally known in the art. Application of the sulfonating fluid to the resin film 38 introduces the sulfonic acid group (-SO₃H) into the polymer chains of the thermoplastic resin at (e.g., on, adjacent, or proximate) the outer side 52, thereby forming a sulfonated region 60 (see FIG. 4B) of the resin film 38 at least at (e.g., on, adjacent, or proximate) the outer side 52 and changing the properties (e.g., the static contact angle) of the resin film 38 within the sulfonated region 60. For example, the thermoplastic resin material of the resin film 38 within the sulfonated region 60 may have a sulfur content with an infrared spectrum detectable amount of the sulfone group (O=S=O) with a peak wavenumber in the region between approximately 1,000 cm⁻¹ and approximately 1,098 cm⁻¹ and, more preferably, between approximately 1,025 cm⁻¹ and approximately 1,050 cm⁻¹ with a peak intensity higher than approximately 0.002 absorbance (or higher than approximately 0.2 percent reflectance) using, for example, an attenuated total reflectance (ATR) technique at (e.g., on, adjacent, or proximate) the outer side 52.

For gas-phase sulfonation of the resin film 38, the resin film 38 (e.g., the outer side 52) may be exposed to the gaseous sulfonation fluid within the chamber. The gaseous sulfonation fluid may include sulfur trioxide (SO₃), sulfur dioxide (SO₂), or a combination of sulfur trioxide (SO₃) and sulfur dioxide (SO₂). The gaseous sulfonation fluid may additionally include a gas which is non-reactive with the sulfur trioxide (SO₃) and/or the sulfur dioxide (SO₂) such as, but not limited to, air or nitrogen. For example, the gaseous sulfonation fluid may be between approximately 0.05 percent and approximately 2 percent sulfur trioxide (SO₃), sulfur dioxide (SO₂), or a combination of sulfur trioxide (SO₃) and sulfur dioxide (SO₂), by volume, in approximately 95 percent to approximately 99.5 percent nitrogen, by volume. A duration for which the resin film 38 is exposed to the gaseous sulfonation fluid may be between approximately 20 seconds and approximately 60 minutes.

For liquid-phase sulfonation of the resin film 38, the resin film 38 (e.g., the outer side 52) is exposed to the liquid sulfonation fluid within the chamber. The liquid sulfonation fluid may include sulfuric acid (H₂SO₄) or fuming sulfuric acid (SO₃H₂SO₄). The liquid sulfonation fluid may have a sulfur trioxide (SO₃) content of between approximately 5 percent and approximately 30 percent, by mass. A duration for which resin film 38 is exposed to the liquid sulfonation fluid may be between approximately 20 seconds and approximately 60 minutes.

Step 304 may include applying a neutralizing fluid to the resin film 38, subsequent to applying the sulfonation fluid to the resin film 38, to remove excess acid from the resin film 38 (e.g., the outer side 52) and to stabilize the modified thermoplastic resin material, for example, with a pH value approximately between 7 and 9. The neutralizing fluid may include, for example, an aqueous solution of a neutralizing agent (e.g., a buffering agent) such as, but not limited to, sodium hydroxide (NaOH), potassium hydroxide (KOH), calcium carbonate (CaCO₃), magnesium oxide (MgO), sodium carbonate (Na₂CO₃), sodium bicarbonate (NaHCO₃), or calcium hydroxide (Ca(OH)₂), amines, or another suitable base. Step 304 may additionally include washing (e.g., with water) the resin film 38, subsequent to applying the neutralizing fluid, to remove any remaining impurities or residues from the sulfonation process, and drying the resin film 38 to remove excess moisture.

Step 306 includes applying at least one coating layer to the resin film 38 (e.g., the outer side 52) to form the coating 40 as shown, for example, in FIG. 4C. For example, one or more layers of a paint primer and a paint topcoat may be applied to the resin film 38 to form the coating 40.

In some embodiments, the Method 300 may include sulfonating the resin film 38 (see Step 304) prior to consolidating the resin film 38 with the thermoplastic skin 34 and the conductive layer 36 (see Step 302). For example, the resin film 38 may be positioned within a chamber containing the sulfonating fluid to expose the resin film 38 to the sulfonating fluid and sulfonate the resin film 38. Sulfonation of the resin film 38 prior to consolidation with the thermoplastic skin 34 and the conductive layer 36 may facilitate a reduction in the necessary size of the sulfonation chamber as they resin film 38 may be arranged as a roll or other non-rigid configuration for positioning within the sulfonation chamber, and may be particularly effective and beneficial for large aerostructure part 32 configurations as the need for a large sulfonation chamber may be avoided. After sulfonation of the resin film 38, the thermoplastic skin 34, the conductive layer 36, and the sulfonated resin film 38 may be consolidated, as previously discussed.

In some embodiments, the Method 300 may not include arranging a discrete layer of the resin film 38 with the thermoplastic skin 34 and the conductive layer 36 for consolidation (see Step 302). For example, the Step 302 may include consolidating only the thermoplastic skin 34 and the conductive layer 36 together. During the consolidation, at least a portion of the thermoplastic matrix material of the thermoplastic skin 34 may flow through the porous or otherwise permeable material of the conductive layer 36, thereby forming the resin film 38 at (e.g., on, adjacent, or proximate) the outer side 48 with the thermoplastic matrix material of the thermoplastic skin 34. The formed resin film 38 may subsequently be sulfonated, for example, as previously discussed with respect to Step 304.

The sulfonation treatment of the present disclosure may be applied on the thermoplastic parts with thermoplastic matrix material including polyamide (PA), polyamide-imide (PAI), polyarylsulfone (PAS), polyethersulfone (PES), polyoxymethylene (POM), polyphenylene sulfide (PPS), polyether ether ketone (PEEK), polyetherimide (PEI), polyphthalamide (PPA), poly ether ketone ketone (PEKK), or poly aryl ether ketone (PAEK), or the like, or any combination thereof. However, some thermoplastic matrix materials have higher resistance to sulfonation and may need longer treatment time and/or higher treatment temperatures such as, for example, polyphenylene sulfide (PPS) and polyetherimide (PEI).

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details. It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A thermoplastic part (32) for an aircraft (20), the thermoplastic part (32) comprising:
a thermoplastic skin (34) including an inner skin side (42) and an outer skin side (44);
a conductive metal layer (36) including an inner layer side (46) and an outer layer side (48), and the inner layer side (46) is disposed at the outer skin side (44) of the thermoplastic skin (34);
a thermoplastic resin film (38) including an inner film side (50) and an outer film side (52), the inner film side (50) is disposed at the outer layer side (48) of the conductive metal layer (36), and the thermoplastic resin film (38) includes a sulfonated thermoplastic resin material forming a sulfonated region (60) of the thermoplastic resin film (38) at the outer film side (52); and
a paint coating (40) disposed on the outer film side (52) of the thermoplastic resin film (38) coincident with the sulfonated region (60).

2. The thermoplastic part of claim 1, wherein the sulfonated region (60) has a sulfur content with an infrared spectrum detectable amount of a sulfone group (O=S=O) with a peak wavenumber between 1,000 cm⁻¹ and 1,098 cm⁻¹, optionally between 1,025 cm⁻¹ and 1,050 cm⁻¹.

3. The thermoplastic part of claim 1 or 2, wherein the conductive metal layer (36) includes an expanded copper foil, an expanded aluminum foil, a bronze mesh, or an aluminum mesh.

4. The thermoplastic part of any preceding claim, wherein the thermoplastic skin (34) includes a thermoplastic matrix material, and the thermoplastic matrix material is the same as the thermoplastic resin material.

5. The thermoplastic part of claim 4, wherein the thermoplastic matrix material is a polyether ether ketone (PEEK), a poly ether ketone ketone (PEKK), or a poly aryl ether ketone (PAEK) thermoplastic matrix material.

6. A method for forming a thermoplastic part (32) for an aircraft (20), the method comprising:
consolidating at least a thermoplastic skin (34) and a conductive metal layer (36) to form:
the thermoplastic skin (34) including an inner skin side (42) and an outer skin side (44);
the conductive metal layer (36) including an inner layer side (46) and an outer layer side (48), and the inner layer side (46) is disposed at the outer skin side (44) of the thermoplastic skin (34); and
a thermoplastic resin film (38) including an inner film side (50) and an outer film side (52), and the inner film side (50) is disposed at the outer layer side (48) of the conductive metal layer (36);
sulfonating a thermoplastic resin material of the thermoplastic resin film (38) by applying a sulfonation fluid to the thermoplastic resin film (38) to form a sulfonated region (60) of the thermoplastic resin film (38) at the outer film side (52); and
applying a paint coating (40) to the outer film side (52) of the thermoplastic resin film (38) coincident with the sulfonated region (60).

7. The method of claim 6, further comprising assembling the thermoplastic skin (34), the conductive metal layer (36), and the thermoplastic resin film (38) together prior to consolidating at least the thermoplastic skin (34) and the conductive metal layer (36), wherein consolidating at least the thermoplastic skin (34) and the conductive metal layer (36) includes consolidating the thermoplastic skin (34), the conductive metal layer (36), and the thermoplastic resin film (38) together.

8. The method of claim 7, wherein the step of sulfonating the thermoplastic resin material is performed prior to the step of consolidating the thermoplastic skin (34), the conductive metal layer (36), and the thermoplastic resin film (38) together.

9. The method of claim 7, wherein the step of sulfonating the thermoplastic resin material is performed subsequent to the step of consolidating the thermoplastic skin (34), the conductive metal layer (36), and the thermoplastic resin film (38) together.

10. The method of any of claims 6 to 9, wherein consolidating at least the thermoplastic skin (34) and the conductive metal layer (36) includes consolidating the thermoplastic skin (34) and the conductive metal layer (36) together to form the thermoplastic resin film (38) by directing a thermoplastic matrix material of the thermoplastic skin (34) through a porous metal material of the conductive metal layer (36).

11. The method of any of claims 6 to 10, wherein the sulfonating fluid is a sulfonating gas.

12. The method of any of claims 6 to 10, wherein the sulfonating fluid is a sulfonating liquid.

13. The method of claim 12, wherein the sulfonating liquid has a sulfur trioxide (SO₃) content of between 5 percent and 30 percent, by mass.

14. The method of any of claims 6 to 13, wherein the sulfonated region (60) has a sulfur content with an infrared spectrum detectable amount of a sulfone group (O=S=O) with a peak wavenumber between 1,000 cm⁻¹ and 1,098 cm⁻¹.

15. The method of any of claims 6 to 14, wherein the thermoplastic skin (34) includes a thermoplastic matrix material, and the thermoplastic matrix material is different than the thermoplastic resin material.
